# EUROPEAN PATENT APPLICATION

(11) **EP 2 354 168 A1**
(43) Date of publication of application: **10.08.2011**
(21) Application number: 10152488.2
(22) Date of filing: 03.02.2010
(51) Int. Cl.: C08F 12/00

(54) **Styrene based compositions made with a minor part of metal free recycled styrene polymer**

(71) Applicant: Total Petrochemicals Research Feluy, 7181 Seneffe (Feluy) (BE)
(72) Inventor: Delahaut, Claude, B - 6200, Bouffioulx (BE); Cassart, Michel, B-1420, Braine l'Alleud (BE)
(74) Representative: Neel, Henry

(57) **Abstract**

The present invention relates to styrene based compositions made with a minor part of metal free post-consumer recycled styrene polymer. This metal free post-consumer recycled styrene polymer can include electronics and electrical devices.

Advantageously the proportion of the metal free recycled vinyl aromatic polymer is up to 50 weight % of the overall polymer (virgin vinyl aromatic polymer + metal free recycled vinyl aromatic polymer). This means the present invention is a vinyl aromatic polymer composition comprising 1 to 50 weight % of a metal free recycled vinyl aromatic polymer for respectively 99 to 50 weight % of a virgin vinyl aromatic polymer.

Preferably said proportion is from 1 to 30%. This means the present invention is a vinyl aromatic polymer composition comprising 1 to 30 weight % of a metal free recycled vinyl aromatic polymer for respectively 99 to 70 weight % of a virgin vinyl aromatic polymer.

Advantageously the present invention is a vinyl aromatic polymer composition comprising 5 to 15 weight % of a metal free recycled vinyl aromatic polymer for respectively 95 to 85 weight % of a virgin vinyl aromatic polymer.

In an embodiment the present invention relates to flame resistant vinyl aromatic polymer based compositions comprising,
1 to 30 parts by weight of a flame retardant,
0.5 to 15 parts by weight of a flame retardant aid,
0 to 2 parts by weight of an anti dripping agent,
0 to 5 parts by weight of additives,
per 100 parts by weight of a vinyl aromatic polymer mixture comprising a minor part of metal free recycled vinyl aromatic polymer.

## Description

### [Field of the invention]

The present invention relates to styrene based compositions made with a minor part of metal free post-consumer recycled styrene polymer. This metal free post-consumer recycled styrene polymer can include electronics and electrical devices. More precisely it relates to vinyl aromatic polymer based compositions made with a minor part of metal free recycled vinyl aromatic polymer.

In an embodiment these compositions are flame resistant. Because of superior processing ability, rigidity, electrical property, etc., styrene-based resins are widely used in various industrial fields for office equipments such as personal computers, word processors, printers and copying machines, household appliances such as TVs, electric and electronic equipments, automobile products and other miscellaneous goods. Particularly, the flame retardant styrene-based resin is mainly used for TV housings. In spite of superior processing ability and physical properties, use of styrene-based resins was accompanied with safety problem because they burn easily. Thus, researches were performed consistently to offer flame retardance to styrene-based resins. Various halogen-based flame retardants, phosphorus-based flame retardants and inorganic flame retardants are added to attain the flame retardance. Up to now, halogen-based flame retardants are used the most widely since they offer superior flame retardance. Styrene-based resins have been used in many applications because of superior processing ability. Flame resistant resin compositions are often required to have a V-0 flammability rating and a high melt flow rate (MFR), especially in molded parts having areas of very low thickness. To obtain a flammability rating of V-0, a resin must pass certain criteria as described in Subject 94, Underwriters Laboratories Tests For Flammability of Plastic Materials (hereinafter referred to as UL-94). One criteria for obtaining a V-0 rating is the absence of cotton-igniting drips from the sample after it has been exposed to a defined flame. However, high melt flow rate resins are more inclined to drip during UL-94 flammability testing, thus risking a lower flammability rating.

### [Background of the invention]

US 6841215 describes a heat resistant pipe formed from a composition comprising polyphenylene ether resin and polystyrene resin. Recycled polystyrene resin recovered from moldings or from foam can be used in the pipes. The recycled polystyrene resin may contain flame retardant additives if so desired. Impact modifiers may also be used in the composition. Flame retardants such as phosphorus compounds, silicone compounds, metal salts and combinations comprising at least one of the foregoing flame retardants may also be used. Flame retardants may be added in quantities of about 0.01 to about 50 parts by weight based on 100 parts of weight of polyphenylene ether resin and polystyrene resin. Drip prevention agents such as those that prevent dripping during combustion, may also be utilized. Polytetrafluoroethylene is preferred as a drip prevention agent because of its ability to form fibrils in the composition.

US 5200432 relates to polymer compositions comprising a melt compounded product of a polyphenylene oxide polymer and a recycled polystyrene material. In a more specific embodiment of the invention, the recycled polystyrene material comprises bromine-modified polystyrene foam and exhibits a melt flow index greater than about 25 when devolatized by heating above its glass transition temperature. Preferably, the recycled polystyrene material is derived from bromine-modified polystyrene foam which is well known in the art and exhibits a melt flow index greater than about 25 when devolatized by heating above its glass transition temperature. The bromine compounds improve the processability of the polystyrene foam materials and also serve as flame retardants. The polystyrene foam materials may also include additional synergistic flame retardants, for example, organic peroxide compounds such as dicumyl peroxide, and nucleating agents which also exhibit low thermal stability. The polymer compositions of the present invention may further include additional components. For example, the compositions may include a second polystyrene resin which is different from the recycled polystyrene material. The second polystyrene resin may be any polystyrene known in the art, including but not limited to polystyrene homopolymers, halogenated polystyrenes, styrene-maleic anhydride copolymers, rubber modified polystyrenes, acrylonitrile-butadiene-styrene copolymers, styrene-acrylonitrile copolymers, poly-alpha-methylstyrene polymers, and mixtures thereof.

WO 97-09372 describes thin, substantially clear, oriented polystyrene films containing post-consumer recycled polystyrene and possessing physical properties substantially similar to that of polystyrene films not containing post-consumer recycled polystyrene. Films of the present invention may comprise up to 100 percent post-consumer recycled polystyrene and are useful as window envelope films.

US 4546139 describes dinaphthyl ethers employed as fire retardant additives to polymers such as ABS, HiPS, PP, HDPE and PBT. One or more other materials which increase fire retardancy may optionally also be present in the composition. Examples of such materials include zinc oxide, zinc borate, boric acid, borax, ferric oxide, antimony trioxide and antimony pentoxide. Antimony trioxide is preferred.

US 6372831 flame resistant resin composition comprising:
A) from about 50 to about 90 parts by weight of a rubber modified polymer derived from a vinyl aromatic monomer,
B) from about 1 to about 8 parts by weight of an polymeric impact modifier,
C) from about 0.5 to about 5 parts by weight of a polyolefin having a high density density of greater than 0.940 g/cm ³ and a melt flow rate of 0.9 less as measured according to ASTM D1238 at 190° C using a 2.16 kg weight,
D) a sufficient amount of a halogen containing flame retardant to provide the composition with 7 to 14 parts by weight halogen, and
E) from about 2 to about 6 parts by weight of an inorganic flame retardant synergist.

Component E is an inorganic flame retardant synergist which are known in the art as compounds which enhance the effectiveness of flame retardants, especially halogenated flame retardants. Examples of inorganic flame retardant synergists include but are not limited to metal oxides, e.g. iron oxide, tin oxide, zinc oxide, aluminum trioxide, alumina, antimony tri-and pentoxide, bismuth oxide, molybdenum trioxide, and tungsten trioxide, boron compounds such as zinc borate, antimony silicates, ferrocene and mixtures thereof.

Preferably the above composition has a reduced tendency to produce cotton-igniting drips, more preferably the composition does not produce any cotton-igniting drips and most preferably, the composition of the present invention does not produce any drips during UL-94 testing. Only antimony trioxide is used in the examples.

WO 2004-015008 describes a rubber-modified flame resistant styrene resin composition comprising:
a) 100 parts by weight of a rubber-modified styrene resin;
b) 0.2 to 20 parts by weight of a flame retardant comprising:
   i) 0.1 to 10 parts by weight of compound selected from a group consisting of tetrabromobisphenol-A-bis(2,3-dibromopropylether), hexabromocyclododecane and a mixture thereof; and
   ii) 0.1 to 10 parts by weight of a brominated epoxy oligomer; and
c) 0.1 to 3 parts by weight of calcium stearate as a lubricant.

The above rubber-modified flame resistant styrene resin composition may further comprise compounds selected from a group consisting of antimony trioxide, antimony pentoxide and a mixture thereof as a flame retardant synergist. Only antimony trioxide is used in the examples.

US 2006-0106141 describes a flame retardant styrene-based resin composition with high impact property comprising:
1-30 parts by weight of a flame retardant;
0.5-15 parts by weight of a flame retardant aid; and
0.1-15 parts by weight of a styrene-containing graft copolymer per 100 parts by weight of a rubber-modified styrene-based copolymer base resin.

The flame retardant aid may be at least one selected from a group consisting of an antimony oxide, a zinc compound, barium borate, zirconium oxide, talc and mica. The antimony oxide may be antimony trioxide, antimony tetraoxide, antimony pentaoxide. Of these flame retardant aids, antimony trioxide is particularly preferable for an HIPS resin. The above flame retardant styrene-based resin composition may further comprise at least one additive selected from a group consisting of a lubricant, a heat stabilizer, an antioxidant, a photostabilizer, an antidripping agent, a pigment and an inorganic filler, depending on application. Only antimony trioxide is used in the examples.

US7629402 describes an acrylonitrile-butadiene-styrene resin composition comprising:
a) 100 weight part of a basic resin composed of an acrylonitrile-butadiene-styrene copolymer and a styrene-acrylonitrile copolymer;
b) 10 to 30 weight part of a brominated organic compound as a flame retardant;
c) 1 to 20 weight part of an antimony flame retardant auxiliary; and
d) 1 to 10 weight part of one or more compounds selected from a group consisting of metal stearate and stearamide compounds.
The antimony flame retardant auxiliary of c) plays a role in increasing flame resistance together with the brominated organic compound, which is exemplified by antimony trioxide, antimony pentoxide, metal antimony, antimony trichloride, etc. Particularly, antimony trioxide is preferred.
The preferably used antimony trioxide has a mean diameter of 0.02 to 5 µm. It is preferable for the mean diameter to be up to 0.5 µm to produce high impact resistance.

The acrylonitrile-butadiene-styrene resin composition can also include additives such as lubricants, heat stabilizers, anti-dripping agents, antioxidants, photo stabilizers, UV intercepting agents, pigments or inorganic fillers. Only antimony trioxide is used in the examples.

WO2009031787 provides a flame retardant resin composition comprising (A) 100 weight part of a basic resin comprising acrylonitrile-butadiene-styrene copolymer resin and styrene-acrylonitrile copolymer resin; and (B) 10 - 30 weight part of a bromine-based organic compound flame retardant, and selectively comprising (C) 1 - 20 weight part of an antimony-based auxiliary flame retardant and (D) 1 - 10 weight part of one or more compounds selected from the group consisting of metalstearate and stearamide compounds, wherein the bromine-based organic compound flame retardant (B) is octabromodiphenyl ethane. As one of the additives that can be added to the flame retardant resin composition of the present invention, the antimony-based auxiliary flame retardant C) is functioning to improve flame retardancy together with the bromine-based organic compound flame retardant (B), which is exemplified by antimony trioxide, antimony pentoxide, metal antimony and antimony trichloride, etc. And, antimony trioxide is preferably used. The flame retardant resin composition can also include other additives such as a lubricant, a heat stabilizer, an anti-dripping agent, an anti-oxidant, a photostabilizer, a UV blocking agent, a pigment or an inorganic filler, etc. The preferable contents of such additives in 100 weight part of the basic resin are as follows; a fluorine-based compound used as an anti-dripping agent is preferably added by 0.05-2 weight part, a lubricant is added by 0.2-10 weight part and a stabilizer is added by 0.2-10 weight part. Only antimony trioxide is used in the examples.

JP1-198655 (A) published on 10 aug 1989 describes a composition having excellent color-developing property, thermal stability and flame-retardancy, by using antimony pentoxide in combination with a flame retardant composed of octabromodiphenyl oxide and/or a brominated epoxy oligomer having a specific molecular weight. The composition is produced by compounding
(A) 100pts.wt. of a thermoplastic resin composition composed of
   (A1) 20-100wt.% of a rubber-reinforced styrene resin and
   (A2) 0-80wt.% of other thermoplastic resin with
(B) 5-25pts.wt., preferably 7-200pts.wt. of octabromodiphenyl oxide and/or a brominated epoxy oligomer having a molecular weight of <=5,000,
(C) 1-10pts.wt of antimony pentoxide and
(D) 0-3pts.wt. of a heat-stabilizing agent (e.g.dibutyltin maleate).
There is no anti dripping agent.

An article "Colloidal antimony pentoxide in flame retarded ABS" published in Compounding 2000--Issues, Solutions and Opportunities, Fire Retardant Chemicals Association, [Fall Conference], Cleveland, Oct. 26-29, 1997 (1997), 201-212 Publisher: Fire Retardant Chemicals Association, Lancaster, Pa. compares antimony pentoxide and antimony trioxide. There is no anti dripping agent.

KR 2009-0016953 unexamined application published on 18 feb 2009 describes a fire proof ABS comprising antimony pentoxide and an anti dripping agent.

It has been discovered that styrene based compositions made with a minor part of metal free recycled styrene polymer have same properties as compositions made with virgin styrene polymer. The compositions of the present invention comply with the european Ecolabel decision (2009/300/EC).

### [Brief description of the invention]

The present invention relates to styrene based compositions made with a minor part of metal free post-consumer recycled styrene polymer. This metal free post-consumer recycled styrene polymer can include electronics and electrical devices.

Advantageously the proportion of the metal free recycled vinyl aromatic polymer is up to 50 weight % of the overall polymer (virgin vinyl aromatic polymer + metal free recycled vinyl aromatic polymer). Advantageously the present invention is a vinyl aromatic polymer composition comprising 1 to 50 weight % of a metal free recycled vinyl aromatic polymer for respectively 99 to 50 weight % of a virgin vinyl aromatic polymer.

Preferably said proportion is from 1 to 30%. This means the present invention is a vinyl aromatic polymer composition comprising 1 to 30 weight % of a metal free recycled vinyl aromatic polymer for respectively 99 to 70 weight % of a virgin vinyl aromatic polymer.

Advantageously the present invention is a vinyl aromatic polymer composition comprising 5 to 15 weight % of a metal free recycled vinyl aromatic polymer for respectively 95 to 85 weight % of a virgin vinyl aromatic polymer.

In addition the above composition may comprise typical processing aids such as mold release agents, plasticizers, flow promoters, e.g. waxes or mineral oil, as well as pigments, thermal stabilizers, UV stabilizers, antioxidants, fillers, e.g. glass fibers, glass beads, and the like.

In an embodiment the present invention relates to flame resistant vinyl aromatic polymer based compositions comprising,
1 to 30 parts by weight of a flame retardant,
0.5 to 15 parts by weight of a flame retardant aid,
0 to 2 parts by weight of an anti dripping agent,
0 to 5 parts by weight of additives,
per 100 parts by weight of a vinyl aromatic polymer mixture comprising a minor part of metal free recycled vinyl aromatic polymer.

Advantageously the vinyl aromatic polymer mixture comprises up to 50 weight % of the overall polymer (virgin vinyl aromatic polymer + metal free recycled vinyl aromatic polymer). In an embodiment the vinyl aromatic polymer mixture comprises 1 to 50 weight % of a metal free recycled vinyl aromatic polymer for respectively 99 to 50 weight % of a virgin vinyl aromatic polymer.
In an embodiment the vinyl aromatic polymer mixture comprises 1 to 30 weight % of a metal free recycled vinyl aromatic polymer for respectively 99 to 70 weight % of a virgin vinyl aromatic polymer.

In an advantageous embodiment the vinyl aromatic polymer mixture comprises 5 to 15 weight % of a metal free recycled vinyl aromatic polymer for respectively 95 to 85 weight % of a virgin vinyl aromatic polymer.
Advantageously the proportions of the flame retardant are from 10 to 25 and preferably from 15 to 20 parts by weight per 100 parts by weight of the vinyl aromatic polymer mixture.
Advantageously the proportions of the flame retardant aid are from 2 to 10 and preferably from 2 to 5 parts by weight per 100 parts by weight of the vinyl aromatic polymer mixture.
Advantageously the proportions of the anti dripping agent are from 0.1 to 1 and preferably from 0.1 to 0.5 parts by weight per 100 parts by weight of the vinyl aromatic polymer mixture.

The compositions of the present invention can be used to make extruded foams or expandable beads or pellets, e.g., XPS or EPS.

The compositions of the present invention comply with the european Ecolabel decision (2009/300/EC). In addition, the compositions of the present invention comply with the European WEEE (Waste Electronic & Electric Equipment) directive (2002/96/EC).

### [Detailed description of the invention]

**As regards the vinyl aromatic polymer**, mention may be made of :
- polystyrene, elastomer-modified polystyrene,
- copolymers of styrene and acrylonitrile (SAN), elastomer-modified SAN, in particular ABS, which is obtained, for example, by grafting (graft polymerization) of styrene and acrylonitrile on a backbone of polybutadiene or of butadiene-acrylonitrile copolymer,
- mixtures of SAN and ABS,
- copolymers with styrene blocks and blocks made of butadiene or isoprene or of a mixture butadiene /isoprene, these block copolymers can be linear blocks copolymers or star blocks copolymers, they can be hydrogenated and/or fonctionnalized. These copolymers are described in ULLMANN'S ENCYCLOPEDIA OF INDUSTRIAL CHEMISTRY, fith edition (1995) Vol A26, pages 655-659, They are sold by Total Petrochemicals under the trade mark Finaclear®, by BASF under the trade mark Styrolux®, under the trade mark K-Resin® by Chevron Phillips Chemical,
- SBR (Styrene butadiene rubber),
Possible examples of the abovementioned elastomers are EPR (the abbreviation for ethylene-propylene rubber or ethylene- propylene elastomer), EPDM (the abbreviation for ethylene- propylene-diene rubber or ethylene-propylene-diene elastomer), polybutadiene, acrylonitrile- butadiene copolymer, polyisoprene, isoprene-acrylonitrile copolymer and copolymers with styrene blocks and blocks made of butadiene or isoprene or of a mixture butadiene /isoprene. These block copolymers can be linear blocks copolymers or star blocks copolymers, they can be hydrogenated and/or fonctionnalized (see above).

In the above vinyl aromatic polymer just mentioned, part of the styrene may be replaced by unsaturated monomers copolymerizable with styrene, for example alpha- methylstyrene or (meth)acrylates, Other examples of styrene copolymers which may be mentioned are chloropolystyrene, poly-alpha-methylstyrene, styrene-chlorostyrene copolymers, styrene-propylene copolymers, styrenebutadiene copolymers, styrene-isoprene copolymers, styrene-vinyl chloride copolymers, styrene-vinyl acetate copolymers, styrene-alkyl acrylate copolymers (methyl, ethyl, butyl, octyl, phenyl acrylate), styrene-alkyl methacrylate copolymers (methyl, ethyl, butyl, phenyl methacrylate), styrene methyl chloroacrylate copolymers and styrene-acrylonitrile-alkyl acrylate copolymers.

In a specific embodiment the vinyl aromatic polymer comprises :
i) from 60 to 100 weight % of one or more C₈₋₁₂ vinyl aromatic monomers; and
ii) from 0 to 40 weight % of one or more monomers selected from the group consisting of C₁₋₄ alkyl esters of acrylic or methacrylc acid and acrylonitrile and methacrylonitrile; which polymer may be grafted onto or occluded within from 0 to 20 weight % of one or more rubbery polymers.

By way of example rubbery polymers can be selected from the group consisting of:
a) co- and homopolymers of C₄₋₆ conjugated diolefins,
b) copolymers comprising from 60 to 85 weight % of one or more C₄₋₆ conjugated diolefins and from 15 to 40 weight % of a monomer selected from the group consisting of acrylonitrile and methacrylonitrile and
c) copolymers comprising from 20 to 60, preferably from 40 to 50 weight % of one or more C₈₋₁₂ vinyl aromatic monomers which are unsubstituted or substituted by a C₁₋₄ alkyl radical and from 60 to 40, preferably from 60 to 50 weight % of one or more monomers selected from the group consisting of C₄₋₆ conjugated diolefins.

The rubber may be prepared by a number of methods, preferably by emulsion or solution polymerization. These process are well known to those skilled in the art.

The vinyl aromatic polymers may be prepared by a number of methods. This process is well known to those skilled in the art and described for example in the above mentioned reference.

If present, preferably the rubber is present in an amount from about 3 to 10 weight %. Polybutadiene is a particularly useful rubber.

In the specific embodiment in which the vinyl aromatic polymer is polystyrene, it could be a crystal polystyrene or a rubber modified polystyrene. What about XPS/EPS?? The rubber modified polystyrene is called HIPS (High Impact Polystyrene) .The process for making HIPS is well known to those skilled in the art. The rubber is "dissolved" in the styrene monomer (actually the rubber is infinitely swollen with the monomer). This results in two co- continuous phases. The resulting "solution" is fed to a reactor and polymerized typically under shear. When the degree of polymerization is about equal to the weight % of rubber in the system it inverts (e.g. the styrene/styrene polymer phase becomes continuous and the rubber phase becomes discontinuous. After phase inversion the polymer is finished in a manner essentially similar to that for finishing polystyrene. The polymer is prepared using conventional bulk, solution, or suspension polymerization techniques.
The vinyl aromatic polymers of the present invention may be co- or homopolymers of C₈₋₁₂ vinyl aromatic monomers. Some vinyl aromatic monomers may be selected from the group consisting of styrene, alpha methyl styrene and para methyl styrene. Preferably the vinyl aromatic monomer is styrene. The vinyl aromatic polymer may be a copolymer comprising from 60 to 100 weight % of one or more C₈₋₁₂ vinyl aromatic monomers; and from 0 to 40 weight % of one or more monomers selected from the group consisting of C₁₋₄ alkyl esters of acrylic or methacrylc acid and acrylonitrile and methacrylonitrile. Suitable esters of acrylic and methacrylic acid include methyl acrylate, ethyl acyrlate, butyl acrylate, methyl methacrylate, ethyl methacrylate and butyl methacrylate. The vinyl aromatic polymers of the present invention may be rubber modified.

Advantageously the vinyl aromatic polymer is a monovinylaromatic polymer. Advantageously the virgin vinyl aromatic polymer is a HiPS or a mixture of HiPS.

As regards the metal free recycled vinyl aromatic polymer, advantageously it contains less than 3000 ppm of Br + metals,advantageously less than 2000 ppm and typically less than 1000 ppm. One can cite the AxPoly PS02 1000 supplied by Axion polymers. The compositions of the invention comprising these metal free recycled vinyl aromatic polymers comply with the restriction of hazardous substances (RoHS) european directive (2002/95/EC).

The Restriction of Hazardous Substances (RoHS) European Directive puts maximum limits on the allowable quantities of some substances in materials used for Electrical and Electronic Equipment in the EU, Specifically:
Cadmium 100 ppm, Lead 1000 ppm, Mercury 1000 ppm, Chromium(VI) 1000 ppm, PBBs 1000 ppm (PolyBrominated Biphenyls), PBDEs 1000 ppm (PolyBrominated DiPhenyl Ethers).

**As regards the flame retardant,** it may be at least one selected from a group consisting of a halogen compound, a phosphorus-based compound and an epoxy compound.

Examples of the halogen compound are tetrabromobisphenol A (TBBA), a TBAA-based phenoxy resin, a TBBA-based carbonate oligomer, a brominated epoxy oligomer (BEO), octabromodiphenyl oxide, decabromodiphenyl oxide, tribromophenoxyethane, hexabromodiphenoxyethane, decabromodiphenylethane, 1,2-bis(pentabromophenyl)ethane, ethylenebis(tetrabromophthalimide), 2,4,6-tris(2,4,6-tribromophenoxy)-1,3,5-triazine, etc.

Examples of the phosphorus-based compound are triphenylphosphate, tri(hydroxyphenyl)phosphate, tricresylphosphate, bisphenol A bis (diphenyl phosphate), resorcinol bis (diphenyl phosphate), etc.

The epoxy compound can be a brominated epoxy oligomer epoxy terminal group of which is substituted with tribromophenol.

The flame retardant can be a mixture of two or more halogen compounds.

**As regards the flame retardant aid**, it can be any component capable to enhance the effectiveness of flame retardants. One can cite the flame retardant aids, also called synergists, which are known in the art as compounds which enhance the effectiveness of flame retardants, especially halogenated flame retardants. Examples of inorganic flame retardant synergists include but are not limited to metal oxides, e.g. iron oxide, tin oxide, zinc oxide, aluminum trioxide, alumina, antimony tri-and pentoxide, bismuth oxide, molybdenum trioxide, and tungsten trioxide, boron compounds such as zinc borate, antimony silicates, ferrocene and mixtures thereof. Antimony pentoxide is preferred.

**As regards the anti dripping agent**, it can be any component provided it prevents dripping such as the composition of the invention passes the flammability tests. One can cite the UL94 horizontal burning UL 94 HB or, IEC 60065 tests.

The composition of the present invention can be used in injection molding applications to manufacture TV cabinets, computer monitors, printer housings and the like. Compositions used in such injection molding applications are typically required to have excellent flammability ratings. Flammability ratings are obtained by testing under UL-94 which requires the exposure of a defined test sample of material to a defined flame for a specified period of time. Ratings of V-0, V-1, and V-2 are obtained according to a number of criteria, including flame time, afterglow time, and cotton-igniting drips. One criteria for obtaining a V-0, which is the most desirable rating, is the absence of cotton-igniting drips. Cotton-igniting drips are drips which ignite the cotton placed at a defined distance below the test specimen during testing. However, the occurrence of any drips increases the possibility of igniting the cotton, which could lower the rating to a V-2. Therefore, it would be beneficial to produce a composition having a reduced tendency to drip during UL-94 test procedures. Preferably the composition of the present invention has a reduced tendency to produce cotton-igniting drips, more preferably the composition does not produce any cotton-igniting drips and most preferably, the composition of the present invention does not produce any drips during UL-94 testing. As examples of anti dripping agents one can cite,

PTFE (polytetrafluorethylene) advantageously introduced as a latex in the composition of the invention,

**As regard the additives**, the compositions of the present invention may also contain minor amounts of typical processing aids such as mold release agents, plasticizers, flow promoters, e.g. waxes or mineral oil, as well as pigments, thermal stabilizers, UV stabilizers, antioxidants, fillers, e.g. glass fibers, glass beads, and the like. Any additive known to be useful in vinyl aromatic polymers based compositions to those of ordinary skill in the art of preparing such compositions can be used with the present invention.

Advantageously a metal stearate compound is used in the composition of the present invention. The metal stearate compound is one or more compounds selected from a group consisting of calcium stearate, magnesium stearate, sodium stearate, zinc stearate, barium stearate and aluminum stearate, and the stearamide compound can be ethylene bis stearamide. The proportion of metal stearate compound is advantageously from 0.1 to 2 and preferably from 0.1 to 1 parts by weight per 100 parts by weight of the vinyl aromatic polymer mixture.

The composition of the present invention can be prepared by mixing the various ingredients in e.g. mixers, extruders of use in the technology of the thermoplastics. The melt flow rate of the composition of the present invention is typically from about 6 to about 30 g/10 min, preferably from about 7 to about 25, more preferably from about 8 to about 22 as measured according to ASTM D1238 (or ISO 1133 H) at 200°C using a 5 kg weight. Typically, high melt flow rate compositions can be prepared by including high melt flow rate HIPS resins within the composition or by including plasticizers such as mineral oil, silicone oil, low molecular weight polystyrene or flame retardants which act as plasticizers, e.g. tetrabromobisphenol A.

### [Examples]

A composition according to the invention is illustrated on table 1.

**Table 1**

| **chemical name** | **Composition** parts by weight | **%** | **CAS** |
|---|---|---|---|
| High impact Polystyrene 1 | 726 3 | 72 0% | 9003-53-6 |
| High impact Polystyrene 2 | | | 9003-53-6 |
| recycled Polystyrene | 103 8 | 10 3% | 9003-53-6 |
| 1,2-bis(pentabromophenyl)Ethane | 50 | 5 0% | 84852-53-9 |
| 2,4,6tris(2,4,6tribromophenoxy) 1,3,5triazine | 90 | 8 9% | 27713-60-4 |
| Antimony pentoxide | 30 | 3 0% | 1314-60-9 |
| Octadecyl 3,5-Di-(tert)-butyl-4-hydroxyhydrocinnamate (Antioxidant) | 1 | 0 1% | 2082-79-3 |
| N,N'-Ethylenebis(stearamide) | 5 | 0 5% | 110-30-5 |
| PTFE emulsion | 2 | 0 2% | |
| Total | 1008 1 | | |

**For example, High impact Polystyrene 1 can be PS impact 4440**, HiPS presenting the following properties :
Melt flow index (200°C-5kg) ISO 1133 H =10 g/10mn
Notched Charpy impact strength ISO 179/1eU= 8 kJ/m²
Notched Izod impact strength ISO 180/1A=10 kJ/m²
Tensile strength at yield ISO 527-2=25 MPa
Tensile strength at break ISO 527-2=20 MPa
Elongation at break ISO 527-2=55 %
Tensile modulus ISO 527-2=2050 MPa
Flexural modulus ISO 178=2000 MPa
**For example, High impact Polystyrene 2 can be PS impact 7240**, a HiPS presenting the following properties :
Melt flow index (200°C-5kg) ISO 1133 H =4.5 g/10mn
Notched Izod impact strength ISO 180/1A=11.0 kJ/m²
Tensile strength at break ISO 527-2= 21 MPa
Elongation at break ISO 527-2= 60 %
Tensile modulus ISO 527-2= 1950 MPa
Flexural modulus ISO 178= 1850 MPa
The recycled polystyrene is **AXPOLY®** PS02 1000 Impact Modified Polystyrene having the following properties :
MFI (5 kg @200°C) ISO1133 = 5 to 9 typically 7 g / 10 mins
Tensile Strength ISO 527 ― 1/2= 18 to 27 typically 23 MPa
Impact Strength ISO 180= 6 to10 typically 8 kj / m2
Elongation@ break ISO 527 ― 1/2= 25% to 40% typically 30%
Br level <3000 ppm typically <1000 ppm ― In compliance with RoHS directive Pellet Size 2mm to 4mm typically 3mm

The PTFE emulsion is the Dyneon® PA5958.

The following table 2 compares compositions based on PS impact 4440 and 7240 and comprising or not metal free recycled polystyrene. Most of the other components have been cited in table 1. Both compositions pass the UL 94 V0 test.

This composition is a flame retardant polystyrene material which uses Axpoly PS02 1000 as part of the formulation. The formulation is based on standard HIPS grades with standard raw materials. In addition, part of the polystyrene component of the formulation is replaced with 10.5% Axpoly PS02 1000. This composition is supplied with certification confirming compliance with the restriction of hazardous substances ( RoHS) european directive. Below is a table showing that the use of Axpoly PS02 1000 has no detrimental effect on the physical properties.

**Table 2**

| Composition (wt%) | #1 | #2 |
|---|---|---|
| HIPS - 7240 | 37.5 | 31 |
| HIPS - 4440 | 47 | 41 |
| recycled polymer | - | 12.5 |
| Antimony pentoxide | 3.5 | 3.5 |
| 1,2-bis(pentabromophenyl)ethane | 4 | 4 |
| 2,4,6-tris(2,4-tribromophenoxy)-1,3,5-triazine | 8 | 8 |
| Octadecyl 3,5-Di-(tert)-butyl-4-hydroxyhydrocinnamate | 0.1 | 0.1 |
| PTFE emulsion | 0.2 | 0.2 |
| N,N'-Ethylenebis(stearamide) | 0.5 | 0.5 |
| Zinc stearate | 0.325 | 0.325 |
| | | |

| Properties | | |
|---|---|---|
| MFI (g/10') | 10.5 | 11 |
| Izod (kJ/m²) | 7.7 | 6.5 |
| Vicat(5 kg) | 82.9 | 83.5 |
| UL94 V0 @ 1.6 mm | Pass | Pass |

On the following table 3 are the ageing tests at 70°C in an oven of the composition of table 2 which comprises the metal free recycled PS.

**Table 3**

| | 0Hrs | 500Hrs | 750Hrs | 1000Hrs | 1250Hrs | 1500Hrs | 2000Hrs |
|---|---|---|---|---|---|---|---|
| | | | | | | | |
| Yeld Strength (Mpa) | 24 4 | 25 0 | 24 8 | 24 5 | 24 4 | 24 7 | 25 3 |
| | | | | | | | |
| Elongation (%) | 38 4 | 37 8 | 41 1 | 43 6 | 44 8 | 46 3 | 44 4 |
| | | | | | | | |
| Impact (kJ/m²) | 7 8 | 7 6 | 7 6 | 7 3 | 7 2 | 7 1 | 7 1 |

## Claims

1. Vinyl aromatic polymer based composition made with a minor part of metal free post-consumer recycled styrene polymer.

2. Composition according to claim 1 wherein the proportion of the metal free recycled vinyl aromatic polymer is up to 50 weight % of the overall polymer (virgin vinyl aromatic polymer + metal free recycled vinyl aromatic polymer).

3. Vinyl aromatic polymer composition according to any one of the preceding claims wherein it comprises 1 to 50 weight % of a metal free recycled vinyl aromatic polymer for respectively 99 to 50 weight % of a virgin vinyl aromatic polymer.

4. Vinyl aromatic polymer composition according to claim 3 wherein it comprises 5 to 15 weight % of a metal free recycled vinyl aromatic polymer for respectively 95 to 85 weight % of a virgin vinyl aromatic polymer.

5. Vinyl aromatic polymer composition according to any one of the preceding claims wherein it comprises typical processing aids such as mold release agents, plasticizers, flow promoters, e.g. waxes or mineral oil, as well as pigments, thermal stabilizers, UV stabilizers, antioxidants, fillers, e.g. glass fibers, glass beads, and the like.

6. Flame resistant vinyl aromatic polymer based compositions comprising,
1 to 30 parts by weight of a flame retardant,
0.5 to 15 parts by weight of a flame retardant aid,
0 to 2 parts by weight of an anti dripping agent,
0 to 5 parts by weight of additives,
per 100 parts by weight of a vinyl aromatic polymer mixture according to any one of claims 1 to 4.

7. Composition according to claim 6 wherein the proportions of the flame retardant are from 10 to 25 and preferably from 15 to 20 parts by weight per 100 parts by weight of the vinyl aromatic polymer mixture.

8. Composition according to any one of claims 6 to 7 wherein the proportions of the flame retardant aid are from 2 to 10 and preferably from 2 to 5 parts by weight per 100 parts by weight of the vinyl aromatic polymer mixture.

9. Composition according to any one of claims 6 to 8 wherein the proportions of the anti dripping agent are from 0.1 to 1 and preferably from 0.1 to 0.5 parts by weight per 100 parts by weight of the vinyl aromatic polymer mixture.

10. Composition according to any one of claims 6 to 9 wherein the proportion of metal stearate compound as an additive is from 0.1 to 2 parts by weight per 100 parts by weight of the vinyl aromatic polymer.
